# EUROPÄISCHE PATENTSCHRIFT

(11) **EP 1 961 678 B1**
(45) Veröffentlichungstag und Bekanntmachung des Hinweises auf die Patenterteilung: **23.09.2009**
(21) Anmeldenummer: 07102741.1
(22) Anmeldetag: 20.02.2007
(51) Int. Cl.: B65G 1/04

(54) **Verfahren zum Umlagern eines zylinderförmigen Stückguts in einem automatisierten Regallager mittels eines einen Saugkopf aufweisenden Greifers**
Method for relocating cylinder shaped goods in an automated high bay store using a gripper with a suction head
Procédé destiné au déplacement d'une marchandise cylindrique dans un rayonnage automatisé à l'aide d'un crochet muni d'une tête aspirante

(43) Veröffentlichungstag der Anmeldung: 27.08.2008
(73) Patentinhaber: Rowa Automatisierungssysteme GmbH, 53539 Kelberg (DE)
(72) Erfinder: Klapperich, Andreas, 56745 Rieden (DE)
(74) Vertreter: Schmidt, Frank-Michael

(56) Entgegenhaltungen:
- DE-A1- 19 509 951
- DE-U1- 29 904 557

## Beschreibung

Die Erfindung betrifft ein Verfahren zum Umlagern eines zylinderförmigen Stückguts in einem automatisierten Regallager mittels eines einen Saugkopf aufweisenden Greifers.

Ein automatisiertes Regallager zur Lagerung von Arzneimittelpackungen auf ebenen Regalböden ist beispielsweise aus der DE 195 09 951 C2 bekannt. Mit Hilfe eines vor den Regalen verfahrbaren Bediengeräts werden die Arzneimittelpackungen auf die Regalböden eingelagert und von den Regalböden wieder entnommen. Das Bediengerät weist einen Sauggreifer mit einem Saugkopf und einen Auflagetisch mit einem Paar gegeneinander verstellbarer Greif- und Führungsbacken auf. Um eine Arzneimittelpackung von einem ersten Ort auf einem Regalboden zu einem zweiten Ort auf demselben oder einem anderen Regalboden umzulagern, fährt das Bediengerät zunächst zu dem ersten Ort, an dem sich die umzulagernde Arzneimittelpackung befindet. Dabei wird der Auflagetisch des Bediengeräts derart vor dem Regalboden positioniert, dass die Oberfläche des Auflagetischs mit der Oberfläche des Regalbodens fluchtet oder geringfügig tiefer angeordnet ist. Dann wird der Saugkopf des Sauggreifers auf die Stirnfläche der auszulagernden Packung aufgesetzt. Die Arzneimittelpackung wird angesaugt, und der Sauggreifer wird zurückbewegt, so dass die Arzneimittelpackung von dem Regalboden auf den Auflagetisch des Bediengeräts gezogen wird. Bei bekannten automatisierten Regallagern der in der Patentschrift beschriebenen Art wird der Sauggreifer gegen die Stirnfläche der auszulagernden Arzneimittelpackung gedrückt, wobei die Packung vom Bediengerät weg auf den Regalboden gegen einen rückseitigen Anschlag geschoben werden kann, sofern nicht bereits zuvor aufgrund eines sich aufbauenden Unterdrucks festgestellt worden ist, dass die Arzneimittelpackung fest angesaugt wurde. Wenn die Arzneimittelpackung vollständig festgesaugt ist, kann der Sauggreifer sie auf den Auflagetisch des Bediengeräts ziehen.

Die bei den aus der Patentschrift und entsprechenden automatisierten Arzneimittellagern von dem Bediengerät gehandhabten Packungen sind grundsätzlich quaderförmiger Gestalt und weisen eine im wesentlichen ebene Stirnfläche auf, an welcher sich der Sauggreifer festsaugen kann.

Damit auch nicht quaderförmige Stückgüter, welche beispielsweise rund, vieleckig oder unregelmäßig geformt sind, von einem Bediengerät gehandhabt werden können, schlägt beispielsweise die Gebrauchsmusterschrift DE 299 04 557 U1 vor, den Sauggreifer durch einen in den Regalboden hineinfahrbaren Backengreifer zu unterstützen, wobei die Innenflächen des Backengreifers mit einer elastischen Beschichtung (z. B. Schaumstoff) derart versehen sind, dass sie sich beim Zusammenfahren der Greifbacken gegen die Seitenflächen des zu ergreifenden Stückguts deformieren und an die Außenkontur des zwischen den Greifbacken eingeklemmten Stückguts anpassen, so dass ein Stückgut selbst dann sicher ergriffen werden kann, wenn der gegen eine Stirnfläche des Stückguts gefahrene Sauggreifer konturbedingt nicht ansaugen kann. Nachteilig bei der in dem Gebrauchsmuster vorgeschlagenen Lösung ist es, dass relativ stabile Greifbacken mit einer relativ dicken Innenbeschichtung zwischen nebeneinander liegende Stückgüter auf dem Regalboden einfahren müssen, so dass sich der zwischen den auf dem Regalboden liegenden Stückgütern einzuhaltende Mindestabstand vergrößert.

Aus dem Stand der Technik ergibt sich, dass die Fachwelt davon ausgeht, dass ein Sauggreifer nur dann zur Umlagerung eines Stückguts eingesetzt werden kann, wenn das Stückgut dort, wo der Sauggreifer ansetzen soll, eine im wesentlichen ebene Stirnfläche aufweist.

Aufgabe der Erfindung ist es, die Einsatzmöglichkeiten des Sauggreifers zu erweitern und erhöhte Mindestabstände der Stückgüter zu vermeiden.

Diese Aufgabe wird erfindungsgemäß durch ein Verfahren mit den Merkmalen des Anspruchs 1 gelöst. Bei dem erfindungsgemä-ßen Verfahren zum Umlagern eines zylinderförmigen Stückguts in einem automatisierten Regallager mittels eines einen Saugkopf aufweisenden Sauggreifers eines Bediengeräts wird zunächst der Saugkopf an die gewölbte Mantelfläche des auf einer ersten Lagerfläche stehenden Stückguts herangeführt, wobei der Saugstrom bereits erzeugt wird, bevor der Saugkopf auf die Mantelfläche trifft. Überraschenderweise hat sich gezeigt, dass bei einem derartigen Betrieb ein sicheres Ansaugen auch bei relativ stark gewölbten zylinderförmigen Mantelflächen möglich ist. Das Stückgut wird nach dem Ansaugen mittels des Sauggreifers auf einen Auflagetisch des Bediengeräts gezogen. Der Auflagetisch wird dann vor eine zweite Lagerfläche bewegt und das Stückgut wird mittels des Sauggreifers bei festgesaugtem Saugkopf von dem Auflagetisch auf die zweite Lagerfläche geschoben. Erst danach wird der Saugunterdruck im Saugkopf abgebaut und der Saugkopf mit dem Sauggreifer zurückgezogen. Somit wird beim Einlagern des Stückguts vom Auflagetisch des Bediengeräts auf die zweite Lagerfläche der Sauggreifer nicht lediglich als Schieber ohne aufgebauten Saugdruck benutzt, wie dies im Stand der Technik üblich war. Es hat sich gezeigt, dass mit der erfindungsgemäßen Vorgehensweise ein sicheres Umlagern zylinderförmiger Stückgüter, insbesondere von Flaschen mit Arzneimitteln, möglich ist.

Bei einer vorteilhaften Weiterbildung des erfindungsgemä-ßen Verfahrens wird der Saugunterdruck im Saugkopf schneller abgebaut, indem ein zum Saugstrom entgegengesetzter Blasstrom erzeugt wird. Dieses Umschalten von Saugstrom auf Blasstrom erfolgt, sobald sich das zylinderförmige Stückgut an der gewünschten Stelle auf der zweiten Lagerfläche befindet. Wird beispielsweise zum Erzeugen des Saugdrucks eine Flügelrad-Pumpe verwendet, so kann das Umschalten durch eine Umsteuerung des Antriebsmotors realisiert werden. Die Stromumschaltung kann auch bei gleichförmig betriebener Pumpe mit Hilfe einer Ventilsteuerung vorgenommen werden.

Im folgenden wird die Erfindung anhand eines in den Zeichnungen dargestellten Ausführungsbeispiels näher beschrieben. In den Zeichnungen zeigen:
Figur 1 eine schematische Darstellung einer ersten Bewegungsphase der Annäherung eines Sauggreifers eines Bediengeräts an ein auf einem Regalboden gelagertes Stückgut und
Figur 2 eine zweite Bewegungsphase, bei der der Sauggreifer an dem Stückgut festgesaugt ist.

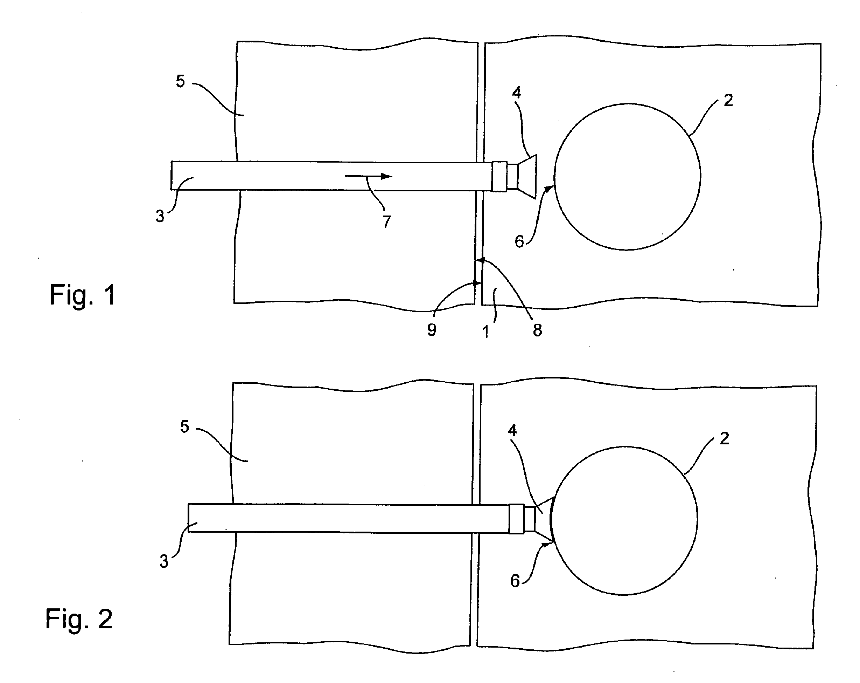

Figur 1 zeigt eine schematische Draufsicht auf einen Abschnitt 1 eines Regalbodens, auf dem ein Stückgut 2 mit einer zylindrischen Mantelfläche, beispielsweise eine ein Arzneimittel enthaltende Flasche, gelagert ist. Auf den in Figur 1 nicht gezeigten Abschnitten des Regalbodens 1 können sich eine Vielzahl weiter quaderförmiger Arzneimittelpackungen oder zylindrischer Flaschen befinden. Über und/oder unter dem Regalboden können sich weitere parallele Regalböden befinden.

Zur Entnahme der Stückgüter von den Regalböden bzw. zur Einlagerung der Stückgüter auf die Regalböden wird ein Bediengerät verwendet, welches vor den Regalböden vertikal und horizontal verfahrbar ist und von einem Computer gesteuert wird. Der das Bediengerät steuernde Computer verfügt über Informationen über Art und Lagerorte der in dem Regallager einliegenden Stückgüter.

Figur 1 zeigt schematisch Teile eines vor dem Regalboden 1 positionierten Bediengeräts, nämlich einen Sauggreifer 3 mit einem Saugkopf 4 und einen Teil eines Auflagetischs 5. Der Sauggreifer 3 ist horizontal quer zu dem Regalboden 1 verfahrbar, so dass der Saugkopf 4 an eine Stirnseite 6 des Stückguts 2 herangeführt werden kann. Der Sauggreifer 3 bewegt sich in Richtung des Pfeils 7 auf die Stirnseite 6 des Stückguts 2 zu. Noch bevor der Saugkopf 4 auf die Stirnseite 6 trifft, wird in dem Sauggreifer ein Saugstrom erzeugt, indem beispielsweise eine Pumpe eingeschaltet oder ein Ventil einer Zuleitung zu einer Saugpumpe geöffnet wird.

Noch bevor der Sauggreifer 3 auf das Stückgut 2 zubewegt wird, wird der Auflagetisch des Bediengeräts derart vor dem Regalboden 1 positioniert, dass die Oberfläche des Auflagetischs 5 mit der Oberfläche des Regalbodens 1 fluchtet oder geringfügig tiefer positioniert ist. Eine Vorderkante 8 des Auflagetischs 5 wird in einem möglichst geringen Abstand vor einer Vorderkante 9 des Regalbodens 1 positioniert.

Figur 2 zeigt eine nachfolgende Bewegungsphase, bei der der Saugkopf 4 bereits an der Stirnseite 6 des Stückguts 2 festgesaugt und entsprechend der Oberflächenkontur der Stirnseite 6 verformt ist. Zu diesem Zweck weist der Saugkopf 4 einen elastisch verformbaren Ring auf, der beispielsweise aus einem elastischen Kunststoffmaterial gefertigt ist und der die Ansaugöffnung umgibt. Die Dicke des elastisch verformbaren Rings hängt von den zu erwartenden Krümmungen der Mantelflächen des Stückguts 2 ab. Je stärker die zu erwartende Krümmung ist, desto dicker sollte der elastisch verformbare Ring ausgebildet sein. Das Anlegen des Saugstroms vor dem Auftreffen des Saugkopfs 4 auf die Stirnseite 6 unterstützt das Anformen des elastischen Rings des Saugkopfs 4 an die Oberfläche des Stückguts 2. Die Vorwärtsbewegung entsprechend dem Pfeil 7 wird unterbrochen, sobald ein Ansaugen des Stückguts 2 aufgrund eines Druckabfalls in dem Sauggreifer 3 festgestellt worden ist. Dadurch wird vermieden, dass das Stückgut 2 auf dem Regalboden 1 in Richtung der Regalrückseite weitergeschoben wird.

Nach dem Festsaugen wird das Stückgut 2 mittels des Sauggreifers 3 von dem Regalboden 1 auf den Auflagetisch 5 des Bediengeräts gezogen. Dann wird der Auflagetisch 5 zusammen mit dem Bediengerät vor eine zweite Lagerfläche, auf die das Stückgut umgelagert werden soll, bewegt. Während des Transports des Stückguts 2 auf dem Auflagetisch 5 kann das Stückgut zusätzlich durch seitliche Greifbacken festgehalten werden, die ebenfalls über dem Auflagetisch 5 montiert (aber in den Figuren 1 und 2 nicht dargestellt) sind. Sobald der Auflagetisch 5 des Bediengeräts vor der zweiten Lagerfläche positioniert ist, wobei die Oberfläche des Auflagetischs 5 mit der Oberfläche der zweite Lagerfläche fluchtet oder geringfügig höher als diese angeordnet ist, wird das Stückgut 2 (ggf. nach Freigabe der seitlichen Greifbacken) mittels des Sauggreifers 3 bei festgesaugtem Saugkopf 4 von dem Auflagetisch 5 auf die zweite Lagerfläche geschoben. Dann wird der Saugunterdruck im Saugkopf 4 abgebaut, indem ein zum Saugstrom entgegengesetzter Blasstrom erzeugt wird, und der Saugkopf 4 mit dem Sauggreifer 3 zurückgezogen.

Anschließend kann das Bediengerät zu einem weiteren Stückgut verfahren und der gesamte Umlagerungsvorgang mit diesem wiederholt werden.

## Patentansprüche

1. Verfahren zum Umlagern eines zylinderförmigen Stückguts (2) in einem automatisierten Regallager mittels eines einen Saugkopf (4) aufweisenden Sauggreifers (3) eines Bediengeräts, wobei:
a) der Saugkopf (4) an die gewölbte Mantelfläche (6) des auf einer ersten Lagerfläche (1) stehenden Stückguts (2) herangeführt wird, wobei der Saugstrom bereits erzeugt wird, bevor der Saugkopf (4) auf die Mantelfläche (6) trifft,
b) das Stückgut (2) nach dem Ansaugen mittels des Sauggreifers (3) auf einen Auflagetisch (5) des Bediengeräts gezogen wird,
c) der Auflagetisch (5) des Bediengeräts vor eine zweite Lagerfläche bewegt wird, '
d) das Stückgut mittels des Sauggreifers bei festgesaugtem Saugkopf von dem Auflagetisch auf die zweite Lagerfläche geschoben wird,
e) der Saugunterdruck im Saugkopf abgebaut wird und
f) der Saugkopf mit dem Sauggreifer zurückgezogen wird.

2. Verfahren nach Anspruch 1, **dadurch gekennzeichnet, dass** im Schritt e) der Saugunterdruck schneller abgebaut wird, indem ein zum Saugstrom entgegengesetzter Blasstrom erzeugt wird.

## Claims

1. A method of relocating a cylindrical article (2) in an automated shelf store by means of a suction gripper (3), which includes a suction head (4), of a handling device, wherein:
a) the suction head (4) is advanced towards the curved outer surface (6) of the article (2) standing on a first storage surface (1), whereby the suction flow is produced before the suction head (4) engages the outer surface (6),
b) after connection to the suction gripper (3) by means of suction, the article (2) is pulled onto a support table (5) of the handling device,
c) the support table (5) of the handling device is moved in front of a second storage surface,
d) the article is pushed by means of the suction gripper, with the suction head firmly attached by suction, from the support table onto the second storage surface,
e) the suction vacuum in the suction head is reduced and
f) the suction head is withdrawn together with the suction gripper.

2. A method as claimed in Claim 1, **characterised in that** the suction vacuum is reduced more rapidly in step e) by producing a blowing flow opposed to the suction flow.

## Revendications

1. Procédé pour transférer un article (2) de forme cylindrique dans un rayonnage automatisé au moyen d'une pince aspirante (3) présentant une tête d'aspiration (4) d'un appareil de commande, dans lequel :
a) la tête d'aspiration (4) est amenée sur la surface d'enveloppe bombée (6) de l'article (2) posé sur une première surface d'entreposage (1), le courant d'aspiration étant déjà généré avant que la tête d'aspiration (4) s'applique sur la surface d'enveloppe (6),
b) l'article (2) est tiré après l'aspiration au moyen de la pince aspirante (3) sur une table d'appui (5) de l'appareil de commande,
c) la table d'appui (5) de l'appareil de commande se déplace devant une seconde surface d'entreposage,
d) l'article est décalé au moyen de la pince aspirante avec la tête d'aspiration fixée par aspiration de la table d'appui sur la seconde surface d'entreposage,
e) la dépression d'aspiration dans la tête d'aspiration est réduite, et
f) la tête d'aspiration est retirée avec la pince aspirante.

2. Procédé selon la revendication 1, **caractérisé en ce qu'**à l'étape e), la dépression d'aspiration est réduite plus rapidement en générant un courant de soufflage opposé au courant d'aspiration.
